# EUROPEAN PATENT APPLICATION

(11) **EP 4 837 409 A1**
(43) Date of publication of application: **11.11.2026**
(21) Application number: 26174554.1
(22) Date of filing: 24.04.2026
(51) Int. Cl.: A01G 20/47, E01H 1/08, F04D 25/06

(54) **OUTDOOR POWER TOOL WITH MOTION DETECTION**

(30) Priority: 28.04.2025 US 202563795946 P
(71) Applicant: Techtronic Cordless GP, Anderson, SC 29621 (US)
(72) Inventor: Kondro, Grzegorz, Anderson, 29621 (US); Hood, Adam Benjamin, Anderson, 29621 (US); Givens, Robert T., Anderson, 29621 (US); Lau, Benjamin Lup Sing II, Anderson, 29621 (US); Dilella, Jesse, Anderson, 29621 (US)
(74) Representative: Zimmermann & Partner Patentanwälte mbB

(57) **Abstract**

Outdoor power tools including an axial blower are provided. An axial blower includes a housing including an inlet, an outlet, and defining an air flow conduit extending from the inlet to the outlet; a fan and a motor disposed within the housing; a power source; and a user input comprising a trigger, the trigger being electrically coupled to the power source and the motor. The blower includes a printed circuit board assembly (PCBA) electrically coupled to the power source, the motor, and the user input. The PCBA further includes a motion detector configured to output signals related to motion of the housing. The PCBA is configured to control the power source and/or operation of the motor based on the output signals from the motion detector.

## Description

### CROSS-REFERENCE TO RELATED APPLICATIONS

The present application claims priority to U.S. Provisional Patent Application No. 63/795,946, filed on April 28, 2025, the disclosure of which is incorporated by reference herein in its entirety.

### FIELD

The present disclosure relates generally to an outdoor power tool having motion detection.

### BACKGROUND

Power tools are generally utilized to more effectively perform tasks that might otherwise require human labor. For example, outdoor power tools such as lawn mowers may replace traditional hand-powered mowers, compressors and inflators may replace hand pumps, snow blowers may replace shovels and plows, and chain saws may replace hand saws. People frequently utilize such power tools to more efficiently and easily perform tasks.

Electric-powered outdoor power tools may be powered by portable batteries. In some arrangements, battery-powered outdoor power tools may include a controller that is configured to control the tool to "time out," "sleep," or otherwise be turned off after a defined period of inactivity, so as to ensure that the battery is not depleted during a period of non-use. However, implementing a time-based shutoff can be inconvenient for a user. For instance, a user may be performing a task with an outdoor power tool and need to pause for a period of time without intending to turn the tool off. Moreover, in the alternative, a power tool may remain in an active state even after a user has put away the tool for storage if the defined period of inactivity has not yet elapsed, draining more power from the battery than necessary.

In other instances, a user may attempt to operate an electric-powered outdoor power tool in a state in which the outdoor power tool is in an inoperable and/or irregular position. However, the outdoor power tool may not have the ability to identify, let alone differentiate, between positioning of the power tool to be able to prevent misuse of the power tool or optimize the use of the power tool based on a current position.

Accordingly, improved control systems for battery powered power tools are desired in the art.

### BRIEF DESCRIPTION

Aspects and advantages of the present disclosure will be set forth in part in the following description, or may be obvious from the description, or may be learned through practice of the technology.

In accordance with one embodiment, an outdoor power tool is provided. The outdoor power tool includes axial blower includes a housing including an inlet, an outlet, and defining an air flow conduit extending from the inlet to the outlet; a fan and a motor disposed within the housing; a power source; and a user input comprising a trigger, the trigger being electrically coupled to the power source and the motor. The blower includes a printed circuit board assembly (PCBA) electrically coupled to the power source, the motor, and the user input. The PCBA further includes a motion detector configured to output signals related to motion of the housing. The PCBA is configured to control the power source and/or operation of the motor based on the output signals from the motion detector.

In accordance with another embodiment, a method for controlling an outdoor power tool is provided. The outdoor power tool includes a tool body extending from a first end to a second end, a tool unit, a motor configured to drive the tool unit, a power source, a user input, and a printed circuit board assembly (PCBA), the PCBA being electrically coupled to the power source, the motor, and the user input, the PCBA further comprising a motion detector configured to output signals related to motion of the housing. The method includes steps of: drawing electrical power from the power source to drive operation of the motor in response to a signal from the user input; receiving, at the PCBA, an output signal from the motion detector indicative of movement of the tool body in at least one direction; and controlling control the power source and/or operation of the motor based on the output signals from the motion detector.

These and other features, aspects and advantages of the present disclosure will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present application, including the best mode of making and using the present systems and methods, directed to one of ordinary skill in the art, is set forth in the specification, which makes reference to the appended figures, in which:
FIG. 1 is a perspective view of a power tool in accordance with embodiments of the present disclosure;
FIG. 2 is a top view of a power tool in accordance with embodiments of the present disclosure;
FIG. 3 is a partial perspective view of a tool body of a power tool in accordance with embodiments of the present disclosure in which parts of a housing have been removed;
FIG. 4 is a partial perspective view of a tool body of a power tool in accordance with embodiments of the present disclosure in which parts of a housing have been removed; and

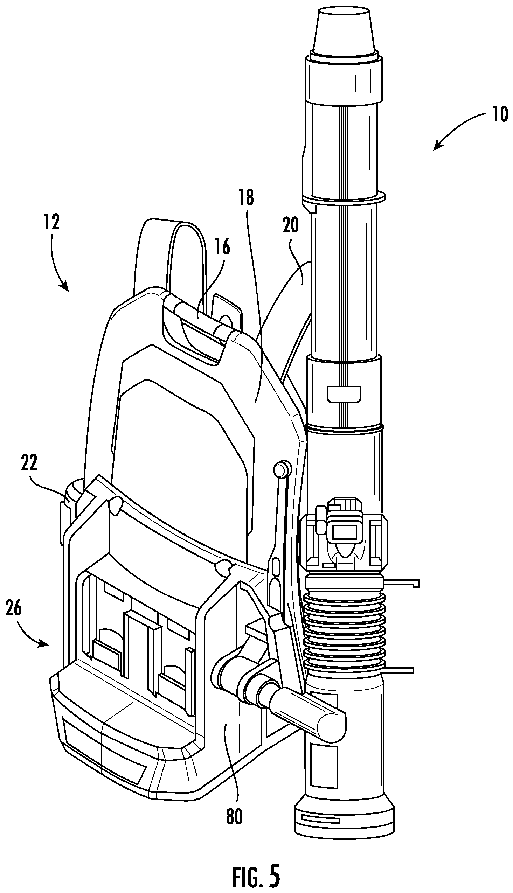

FIG. 5 is a perspective view of a power tool in a storage position in accordance with embodiments of the present disclosure.

### DETAILED DESCRIPTION

Reference now will be made in detail to embodiments of the present disclosure, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, the present invention is directed to an outdoor power tool, e.g., a blower, having a printed circuit board assembly (PCBA) including a motion detector coupled thereto. The motion detector may include an accelerometer and/or a gyro, such as a one-axis, two-axis, or three-axis gyro or a one-axis, two-axis, or three-axis accelerometer. The motion detector may detect motion of the tool, e.g., blower, and send signals to the PCBA to operate the tool based on the motion of the tool.

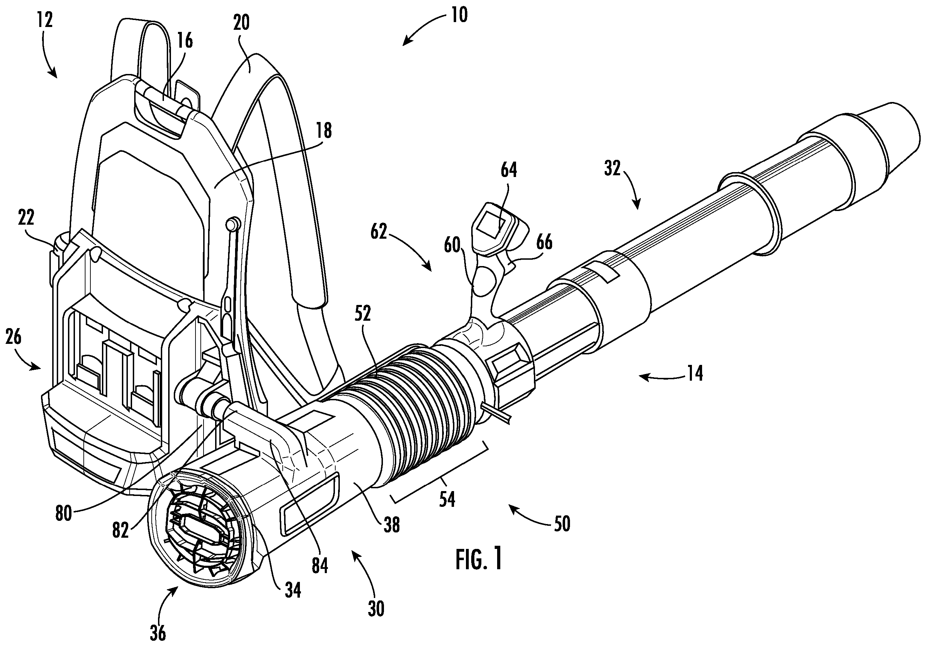

Referring now to the drawings, FIG. 1 illustrates a power tool 10 including a backpack assembly 12 and a tool body 14. As shown in FIG. 1, the tool body 14 may be a blower, such as an axial blower. However, the present inventors contemplate that the tool body 14 may be any type of backpack supported power tool, such as a backpack sprayer.

The backpack assembly 12 includes a frame 16 having a back plate 18. The backpack assembly 12 further includes shoulder straps 20 coupled to the back plate 18 that are configured to be worn against the user's back to support the weight of the tool 10. Waist straps 22 may optionally be provided coupled to the back plate 18 to further support the weight of the tool 10 against the user's body. The backpack supported power tool 10 may be electrically powered by a power source or power supply, e.g., one or more power tool battery packs (not shown). The backpack assembly 12 may include a battery mounting assembly 26 configured to receive the one or more batteries and provide electrical power to the tool body 14. The battery mounting assembly 26 includes at least one battery interface 28 configured to be electrically coupled with a battery (not shown). For instance, the battery mounting assembly 26 may include two or more battery interfaces 28 configured to receive two or more respective batteries. The batteries may be removably coupled to the backpack assembly 12.

FIG. 1 illustrates the tool body 14 as an axial blower. The axial blower includes a blower housing 30 and a blower outlet tube 32 downstream of the blower housing 30 with respect to a direction of airflow through the axial blower. The blower housing 30 defines a blower inlet bell 34 having a blower inlet opening 36, and a fan-motor chamber 38 disposed downstream of the blower inlet bell 34. The blower inlet bell 34 and the blower inlet opening 36 may be defined by a blower inlet bell wall 40. In some aspects, an inlet grate 42 may be provided to cover at least a portion of the blower inlet opening 36. An axial fan 44 and a motor (not shown) are disposed in the fan-motor chamber 38. For instance, the motor may be arranged downstream of the fan 44.

The motor is electrically powered by a power source, e.g., the one or more batteries mounted in the backpack assembly 12. The motor rotationally drives the fan 44 to draw air into the blower inlet bell 34 of blower housing 30 through the inlet 36, and exhaust air from the blower housing 30 through an outlet 46 of the blower housing 30. The outlet 46 may be directly or indirectly coupled with the blower outlet tube 32. The blower outlet tube 32 is coupled to the blower housing 30 proximate the outlet 46 in order to direct the exhausted air.

The tool body 14 may further include a bellows or flexible portion 50 between the blower housing 30 and the blower outlet tube 32, e.g., to enable the blower outlet tube 32 to pivotably move and/or rotate relative to the blower housing 30. An outer wall 52 of the flexible portion 50 is generally formed from a resilient and flexible material, such as rubber, etc. The outer wall 52 may have a serpentine shape and includes a flexible region or bellows portion 54 with a plurality of ribs to permit the outer wall 52 to expand, contract, and elastically deform.

A handle or joystick 60, may be coupled to the blower housing 30 and/or outlet tube 32. The joystick 60 may extend in a vertical direction from an upper surface of the blower housing 30 and/or outlet tube 32. Stated differently, a blower axis may be defined along the airflow direction of the axial blower from the blower inlet opening 36 through the outlet tube 32, and the joystick 60 may extend in a direction generally perpendicular to the blower axis.

The joystick 60 may be used for positioning and manipulating the outlet tube 32, and thereby directing the outlet and stream of air in a desired direction. In some aspects of the invention, the flexible portion 50 may be located upstream of the joystick 60 relative to the blower inlet 36 and outlet tube 32. For instance, the flexible portion 50 may be coupled downstream of the fan-motor chamber 38. In this manner, a user may grip the joystick 60 to move and/or rotate the blower outlet tube 32 relative to the blower housing 30.

The joystick 60 may further include a user interface 62 configured for a user to control operation of the tool 10. For instance, the user interface 62 may include a display 64 positioned on the joystick 60 and oriented to be visible to the user during operation of the tool 10. The user interface 62 may include one or more buttons or levers, e.g., including a trigger 66 and/or a cruise control button or lever (not shown), configured to be actuated by a user to provide electrical current to the motor, which drives the fan and produces a stream of air through the blower housing 30 and outlet tube 32.

As shown in FIG. 1, the tool body 14 is side-mounted to the backpack assembly 12. In other words, when the backpack assembly 12 is worn by a user and supported on the user's back, the tool body 14 extends along one side of the user's body. While FIG. 1 illustrates the tool body 14 disposed on the right side of the backpack assembly 12, it is to be understood that the tool body 14 may alternatively be disposed on the left side of the backpack assembly 12. Further, the tool 10 may include a plurality of tool bodies 14, e.g., a tool body 14 on each of the right side and the left side, both coupled with the backpack assembly 12.

A coupling apparatus 80 is provided to couple the tool body 14 to the backpack assembly 12. For instance, a connecting rod 82 may extend from the backpack assembly 12 to the tool body 14. As shown in FIG. 1, the connecting rod 82 may extend from the backpack assembly 12 in a perpendicular direction, e.g., toward a lateral side of the backpack assembly 12. The connecting rod 82 may be coupled to the blower housing 30 of the tool body 14, e.g., at a receiver 84. For instance, the connecting rod 82 may be received at an upper side of the blower housing 30, e.g., above the inlet bell 34. The connecting rod 82 may be rotatably coupled to the backpack assembly 12 to enable the tool body 14 to be rotated about an axis defined by the connecting rod 82. In this manner, a user may adjust the pitch of the tool body 14 in an upward and downward direction.

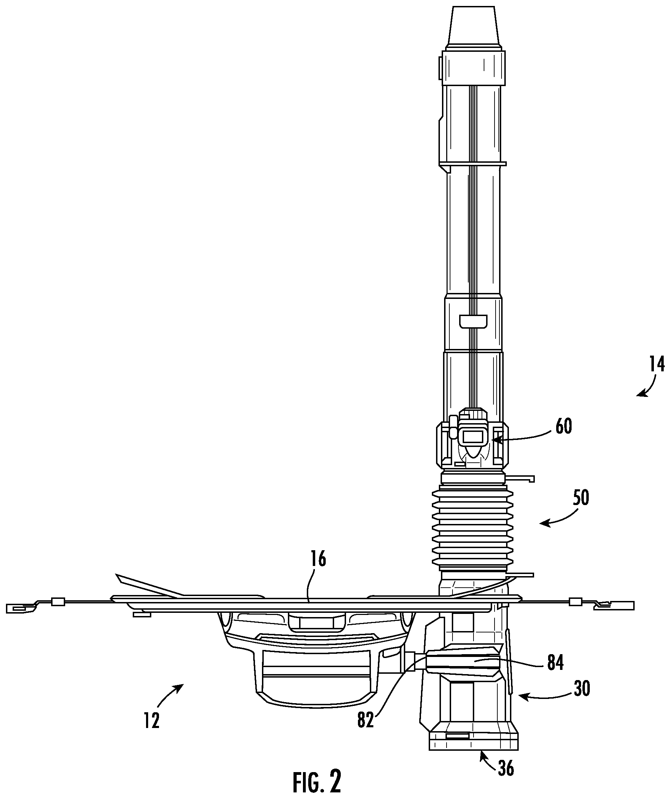

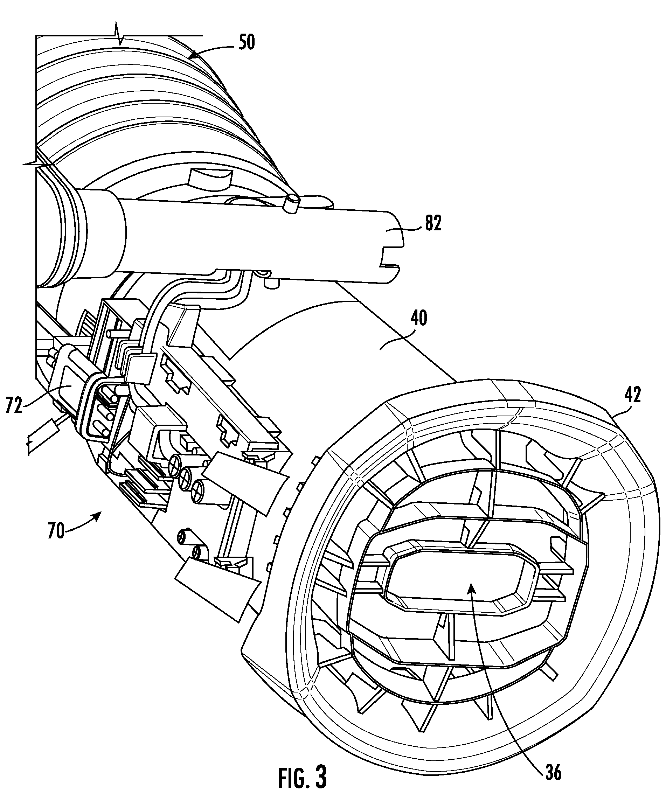

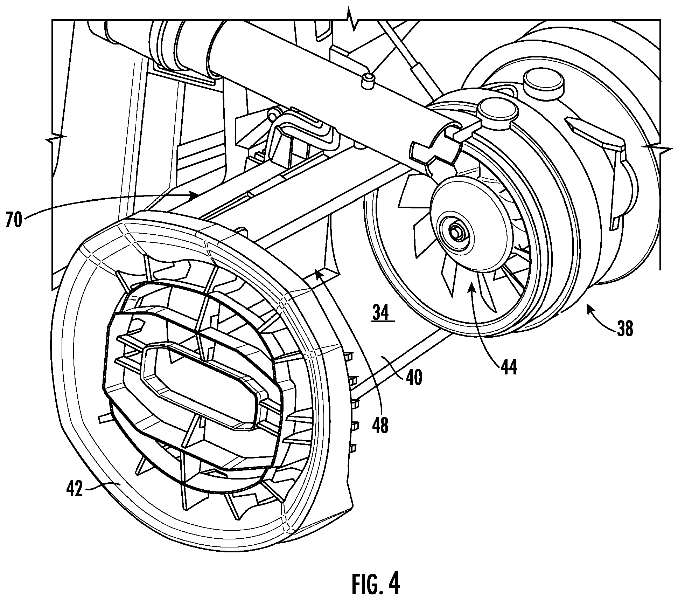

Turning to FIGS. 2-4, the power tool 10 includes a printed circuit board assembly (PCBA) 70 to which the electronics of the power tool 10 are electrically coupled. The battery interface(s) 28 are electrically coupled to the PCBA 70. The PCBA 70 is further electrically coupled to a trigger 66 and the fan 44.

The PCBA may be enclosed in a PCBA housing 74. The PCBA housing 74 may be coupled to the blower housing 30. For instance, in some embodiments, the PCBA housing 74 may be integral with at least a portion of the blower housing 30. The PCBA 70 may be arranged alongside the blower inlet bell 34. For instance, the PCBA 70 may be mounted or coupled to an outer side of the blower inlet bell wall 40. In some aspects, the blower inlet bell wall 40 may include one or more openings 48 configured to enable airflow from the inlet bell to the PCBA 70. In this manner, airflow through the inlet bell 34 of the blower tool 10 may provide cooling airflow to the PCBA 70. The PCBA housing 74 may surround an outer side of the PCBA opposite the blower inlet bell wall 40. However, it is to be understood that the PCBA 70 may be located in any suitable location of the tool body 14, such as but not limited to a location adjacent to or along the fan-motor chamber 38.

The PCBA 70 is configured to receive a signal from the trigger 66 upon actuation of the trigger 66. The signal received by the PCBA 70 from the trigger 66 may cause the PCBA 70 to draw electrical power from the power source, e.g., battery pack (not shown) through the battery interface 28. The electrical power may be directed to power the fan 44. Accordingly, the fan 44 is operated, and fluid (e.g., air) is drawn through the inlet opening 36 and expelled (i.e., blown) from the outlet blower tube 32.

The PCBA 70 may be further electrically coupled to the user interface 62. The user interface 62 may be actuated by a user in addition to actuation of the trigger 66 to control operation of the blower 10. The user interface 62 may provide, for example, a safety/lockout of the trigger 66, and/or a speed control of the fan 44, such as but not limited to cruise control.

The PCBA 70 may, in some circumstances, be electrically coupled to the user interface 62, the trigger 66, and the battery interface(s) 28 even include when no electricity is actively flowing between the battery interface(s) 28, user interface 62, and/or the motor. In this manner, the PCBA 70 may remain active even when a user is not commanding the tool to operate (e.g., when the trigger 66 is not activated or pressed). In this manner, the tool may remain responsive to user inputs (e.g., at the user interface 62 and/or trigger 66) more quickly. In contrast, when the PCBA 70 is off or disabled, or otherwise not electrically coupled with the motor and the battery interface(s) 28, there may be a significant time delay in motor startup from user input if the PCBA is off or disabled.

The PCBA 70 further includes a motion detector 72 configured to detect motion of the tool body 14. The motion detector 72 may be in the form of a tilt sensor, including but not limited to, multi-axis accelerometers, gyroscopes, infrared sensors, motion sensors, or any combination thereof, are configured to detect the orientation of the tool body 14. For instance, the motion detector 72 may include a multi-axis accelerometer, such as a 3-axis accelerometer. The motion detector 72 may detect motion of the tool body 14 in the pitch direction (i.e., rotation about the axis defined by the connection rod 82), as well as motion of the tool body 14 in a side-to-side or horizontal direction and an up-and-down or vertical direction, e.g., by movement of the flexible portion 50. In particular, the motion detector 72 may be able to sense or measure the magnitude of movement, e.g., an angular measurement about each axis relative to an at-rest state of the tool body 14. Moreover, the motion detector 72 may be able to sense or measure the velocity and acceleration of movement of the tool body 14 about each direction.

The motion detector 72 is configured to determine or sense motion of the tool body 14 and relative positioning of the tool body 14 and send signals to a processor of the PCBA 70. The output signals from the motion detector may be received by the processor and used to determine and/or make changes to the operation of the power tool 10. The PCBA 70, including the processor, may control the power source and/or operation of the power tool 10 based on the output signals from the motion detector 72.

For instance, in one aspect of the present invention, output signals from the motion detector 72 may be used to extend the time that the power tool 10 is running. The processor may include stored instructions to 'sleep' the controller, e.g., the PCBA 70, after a certain duration of time if the trigger 66 is not activated. In particular, a timeout counter may be activated to measure a duration of time that the trigger 66 is not activated. However, outputs from the motion detector 72 may extend the duration of time before 'sleeping' the controller. In particular, if motion is detected by the motion detector 72, the processor may instruct the PCBA 70 to remain powered on (i.e., continuing to receive power from the battery). More specifically, if motion is detected by the motion detector 72, the timeout counter may not be initiated. Further, a runtime or illumination time of the display 64 may be extended based on detection of motion by the motion detector 72.

Similarly, the motion detector 72, e.g., three-axis accelerometer, may detect when the tool body 14 has been placed into a docked or storage position. The docked or storage position may be a position in which the tool body 14 is rotated upward about the axis of the connection rod 82 so that the outlet tube 32 extends vertically upward and, optionally, the blower inlet 36 may be supported on a supporting surface or hung against a wall or other surface. The motion detector 72 may detect that the tool body 14 is placed in the docked or storage position. When the motion detector 72 sends a signal to the processor that the tool body 14 is in the docked or storage position, the PCBA 70 may shutdown even if the duration of time before 'sleeping' the controller has not expired. In particular, the PCBA 70 may disable electrical connection from the battery interface(s) 28 to the motor and/or to the display 64.

Motion detected by the motion detector 72 may further be used by the processor to instruct variations in the operation of the blower tool during use. For instance, the processor may cause the motor, and thereby, the fan 44, to increase or decrease in speed based on a position of the blower tube 32. For instance, sensed information regarding a horizontal angle, a vertical angle, or both, as determined by the motion detector 72, may be used by the processor to vary the speed of the motor. As a non-limiting example, the speed of the blower may be increased when a vertical angle of the blower tube 32 is detected by the motion detector 72 to be pointing downward, e.g., below a horizontal plane towards a floor or surface. Correspondingly, the speed of the blower may be decreased when the vertical angle of the blower tube 32 is detected by the motion detector 72 to be pointing upward, e.g., above a horizontal plane away from a floor or surface. Furthermore, the motion detector 72 may detect acceleration in a particular direction, e.g., moving the blower tube 32 in an upward direction, and the processor may use the acceleration information to vary, e.g., decrease, the speed of the blower.

Similarly, output from the motion detector 72 may be implemented to disable features of the tool and/or disable power supply from the battery to the motor if the tool body 14 is in an irregular or unsuitable position. For instance, the motion detector 72 may detect an irregular position of the tool body 14, such as being positioned upside down. In particular, the coupling apparatus 80 limits the pivoting of the tool body 14 about the connection rod 82. If the motion detector 72 detects a position in which the PCBA 70 and blower inlet end 36 is located at an irregular angle, e.g., outside the pivot range of the connection rod 82, the motion detector 72 may identify that the position is irregular and/or not suitable for use of the tool 10. The processor may be configured to disable power supply to the motor of the tool 10, i.e., to shut off operation of the tool 10. Alternatively, the processor may be configured to disable features such as cruise control, which enable operation of the tool 10 without maintaining continuous contact with the trigger 66, when the motion detector 72 detects an irregular position. In this manner, it can be ensured that a user is intentionally causing the blower tool 10 to operate in the irregular position by requiring continuous contact with the trigger 66.

Further, in some instances, a malfunction or damage to the fan 44 (e.g., damage to one or more impellers of the fan 44), may cause vibration in the tool body 14 due to imbalances or unbalanced impellers. While some amount of vibration generated as a result of rotation of the motor and fan 44 may generally be expected during operation of the blower, the motion detector 72 may detect that the vibrations exceed a threshold vibration level. If the vibrations detected by the motion detector 72 exceed the threshold, e.g., a threshold value stored by the processor, the processor may cause the tool to shut down. Specifically, electrical connection between the power supply, e.g., battery interface(s) 28, and the motor may be ceased. In this manner, the tool 10 can be prevented from operating in a damaged or malfunctioning state, thereby preventing further damage and alerting the user of the malfunction in the blower operation.

It will be appreciated by persons skilled in the art that numerous variations and/or modifications may be made to the invention as shown and described in the specific embodiments. These variations and/or modifications could well be within the scope of the invention as claimed. Also, features described in different embodiments may be interchanged, combined, etc., to provide further embodiments of the invention. The described embodiments of the invention should be considered in all respects as illustrative, not restrictive.

For example, the power tool of the invention may be any type of outdoor power tool that can be operated as a handheld and/or user-supported, e.g., backpack or waist-mounted, tool. Examples include blower/vacuums, sprayers, string trimmers, edgers, pole saws, chain saws, hedge trimmers, augers, pole loppers, shears, brush cutters, pressure washers, etc. The power tool can take any form, with additional or alternative components, and may be an attachment-capable combination power tool kit. The power tool may be operated with AC power (with a power cord for connection to the mains), with DC power (one or more battery packs, connected in series, parallel, or both), hybrid AC/DC power, etc. The battery packs may have a nominal voltage of 18V, 36V, 72V, etc.

For further example, a user control (e.g., on the blower or through a wireless application) may be able to disable or adjust the use of some or all the motion detection functions of the controller.

Further aspects of the disclosure are provided by one or more of the following embodiments:

An outdoor power tool may include axial blower including a housing including an inlet, an outlet, and defining an air flow conduit extending from the inlet to the outlet; a fan and a motor disposed within the housing; a power source; and a user input comprising a trigger, the trigger being electrically coupled to the power source and the motor. The blower includes a printed circuit board assembly (PCBA) electrically coupled to the power source, the motor, and the user input. The PCBA further includes a motion detector configured to output signals related to motion of the housing. The PCBA is configured to control the power source and/or operation of the motor based on the output signals from the motion detector.

The axial blower of any one or more of the embodiments, wherein the motion detector comprises a multi-axis accelerometer.

The axial blower of any one or more of the embodiments, wherein the multi-axis accelerometer is a three-axis accelerometer.

The axial blower of any one or more of the embodiments, wherein the motion detector is adapted to detect movement of the housing in three directions.

The axial blower of any one or more of the embodiments, wherein when the PCBA receives output signals from the motion detector that indicate movement of the housing, the PCBA extends a duration of time that the power supply is electrically coupled to the motor.

The axial blower of any one or more of the embodiments, the user input further including a display, wherein the PCBA controls the display to remain illuminated based on output signals received from the motion detector that indicate movement of the housing.

The axial blower of any one or more of the embodiments, wherein the PCBA controlling operation of the motor based on the output signals from the motion detector includes varying a motor speed of the blower based on a vertical angle and/or a horizontal angle of the housing detected by the motion detector.

The axial blower of any one or more of the embodiments, wherein the motion detector is configured to detect vibrations above a threshold vibration level, further wherein when the motion detector sends output signals to the PCBA indicating that the vibrations exceed the threshold, the PCBA may cause the power supply to be disconnected from the motor.

The axial blower of any one or more of the embodiments, further comprising a frame including a backplate configured to be supported on a user's back, wherein the frame is coupled to the tool body.

The axial blower of any one or more of the embodiments, wherein the housing may be arranged in a storage position relative to the frame; wherein when the motion detector sends output signals to the PCBA indicating that the housing is in the storage position, the PCBA may cause the power supply to be disconnected from the motor.

The axial blower of any one or more of the embodiments, wherein the motion detector is configured to detect when the housing is in an irregular position relative to an expected position in which the frame is being worn by a user, further wherein when the motion detector sends output signals to the PCBA indicating that the housing is in an irregular position, the PCBA may cause the power supply to be disconnected from the motor and/or to disable one or more modes of operation of the blower.

The axial blower of any one or more of the embodiments, wherein the PCBA disabling one or more modes of operation of the blower includes disabling a cruise control mode of operation.

The axial blower of any one or more of the embodiments, wherein the irregular position includes a position where the frame and the housing are upside down relative to the expected position in which the frame is being worn by a user.

The axial blower of any one or more of the embodiments, wherein the blower housing comprises a flexible section downstream of the fan, wherein the motion detector is configured to detect motion of the flexible section in at least two directions.

The axial blower of any one or more of the embodiments, wherein the PCBA is arranged upstream of the fan and motor relative to a direction of airflow through the housing.

The axial blower of any one or more of the embodiments, wherein the PCBA is coupled to a wall of the housing surrounding a blower air inlet volume.

The axial blower of any one or more of the embodiments, wherein the wall of the housing comprises at least one opening configured to enable cooling airflow from the blower air inlet volume to the PCBA.

A method for controlling an outdoor power tool including a outdoor power tool comprising a tool body extending from a first end to a second end, a tool unit, a motor configured to drive the tool unit, a power source, a user input, and a printed circuit board assembly (PCBA), the PCBA being electrically coupled to the power source, the motor, and the user input, the PCBA further comprising a motion detector configured to output signals related to motion of the housing, the method comprising the following steps: drawing electrical power from the power source to drive operation of the motor in response to a signal from the user input; receiving, at the PCBA, an output signal from the motion detector indicative of movement of the tool body in at least one direction; and controlling control the power source and/or operation of the motor based on the output signals from the motion detector.

The method of any one or more of the embodiments, wherein the step of controlling control the power source and/or operation of the motor based on the output signals from the motion detector includes increasing a duration of time that the power source actively supplies the motor and/or the user input with electrical power.

The method of any one or more of the embodiments, wherein the step of controlling control the power source and/or operation of the motor based on the output signals from the motion detector includes discontinuing the supply of electrical power from the power source to the motor to shut off the tool.

This written description uses examples to disclose the present application, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. An axial blower comprising:
a housing including an inlet, an outlet, and defining an air flow conduit extending from the inlet to the outlet,
a fan and a motor disposed within the housing,
a power source,
a user input comprising a trigger, the trigger being electrically coupled to the power source and the motor, and
a printed circuit board assembly (PCBA), the PCBA being electrically coupled to the power source, the motor, and the user input, the PCBA further comprising a motion detector configured to output signals related to motion of the housing,
wherein the PCBA is configured to control the power source and/or operation of the motor based on the output signals from the motion detector.

2. The axial blower of claim 1, wherein the motion detector comprises a multi-axis accelerometer, optionally wherein the multi-axis accelerometer is a three-axis accelerometer.

3. The axial blower of claim 1 or 2, wherein the motion detector is adapted to detect movement of the housing in three directions.

4. The axial blower of any of the preceding claims, wherein when the PCBA receives output signals from the motion detector that indicate movement of the housing, the PCBA extends a duration of time that the power supply is electrically coupled to the motor.

5. The axial blower of any of the preceding claims , the user input further including a display, wherein the PCBA controls the display to remain illuminated based on output signals received from the motion detector that indicate movement of the housing.

6. The axial blower of any of the preceding claims, wherein the PCBA controlling operation of the motor based on the output signals from the motion detector includes varying a motor speed of the blower based on a vertical angle and/or a horizontal angle of the housing detected by the motion detector.

7. The axial blower of any of the preceding claims, wherein the motion detector is configured to detect vibrations above a threshold vibration level, further wherein when the motion detector sends output signals to the PCBA indicating that the vibrations exceed the threshold, the PCBA may cause the power supply to be disconnected from the motor.

8. The axial blower of any of the preceding claims, further comprising a frame including a backplate configured to be supported on a user's back, wherein the frame is coupled to the tool body,
optionally wherein the housing may be arranged in a storage position relative to the frame; wherein when the motion detector sends output signals to the PCBA indicating that the housing is in the storage position, the PCBA may cause the power supply to be disconnected from the motor; and/or
wherein the motion detector is configured to detect when the housing is in an irregular position relative to an expected position in which the frame is being worn by a user, further wherein when the motion detector sends output signals to the PCBA indicating that the housing is in an irregular position, the PCBA may cause the power supply to be disconnected from the motor and/or to disable one or more modes of operation of the blower.

9. The axial blower of claim 8, wherein the PCBA disabling one or more modes of operation of the blower includes disabling a cruise control mode of operation; and/or wherein the irregular position includes a position where the frame and the housing are upside down relative to the expected position in which the frame is being worn by a user.

10. The axial blower of any of the preceding claims, wherein the blower housing comprises a flexible section downstream of the fan, wherein the motion detector is configured to detect motion of the flexible section in at least two directions.

11. The axial blower of any of the preceding claims, wherein the PCBA is arranged upstream of the fan and motor relative to a direction of airflow through the housing, optionally wherein the PCBA is coupled to a wall of the housing surrounding a blower air inlet volume.

12. The axial blower of claim 11, wherein the wall of the housing comprises at least one opening configured to enable cooling airflow from the blower air inlet volume to the PCBA.

13. A method for controlling an outdoor power tool, the outdoor power tool comprising a tool body extending from a first end to a second end, a tool unit, a motor configured to drive the tool unit, a power source, a user input, and a printed circuit board assembly (PCBA), the PCBA being electrically coupled to the power source, the motor, and the user input, the PCBA further comprising a motion detector configured to output signals related to motion of the housing, the method comprising steps of: drawing electrical power from the power source to drive operation of the motor in response to a signal from the user input; receiving, at the PCBA, an output signal from the motion detector indicative of movement of the tool body in at least one direction; and controlling the power source or operation of the motor based on the output signals from the motion detector.

14. The method of claim 13, wherein the step of controlling the power source or operation of the motor based on the output signals from the motion detector includes increasing a duration of time that the power source actively supplies the motor or the user input with electrical power.

15. The method of claim 13 or 14, wherein the step of controlling the power source or operation of the motor based on the output signals from the motion detector includes discontinuing the supply of electrical power from the power source to the motor to shut off the tool.
